# EUROPÄISCHE PATENTSCHRIFT

(11) **EP 2 370 306 B1**
(45) Veröffentlichungstag und Bekanntmachung des Hinweises auf die Patenterteilung: **16.04.2014**
(21) Anmeldenummer: 09747803.6
(22) Anmeldetag: 15.10.2009
(51) Int. Cl.: B62D 15/02

(54) **STEUEREINRICHTUNG ZUR EINPARKUNTERSTÜTZUNG**
CONTROL DEVICE FOR ASSISTING THE PARKING PROCESS
DISPOSITIF DE COMMANDE DESTINÉ À FOURNIR UNE ASSISTANCE AU RANGEMENT EN STATIONNEMENT

(30) Priorität: 26.11.2008 DE 102008044073
(43) Veröffentlichungstag der Anmeldung: 05.10.2011
(73) Patentinhaber: Robert Bosch GmbH, 70442 Stuttgart (DE)
(72) Erfinder: KRAUTTER, Wolfgang, 71229 Leonberg (DE); SCHERL, Michael, 74321 Bietigheim (DE); GUENTHER, Clemens, 76275 Ettlingen (DE); HAUG, Matthias, 70469 Stuttgart (DE)
(86) Internationale Anmeldenummer: PCT/EP2009/063459
(87) Internationale Veröffentlichungsnummer: WO 2010/060681

(56) Entgegenhaltungen:
- EP-A- 1 470 958
- WO-A-2007/014595
- DE-A1-102005 037 468
- DE-A1-102007 035 219
- US-A1- 2005 231 341

## Beschreibung

### Stand der Technik

Die Erfindung geht aus von einer Steuereinrichtung zur Einparkunterstützung und einem Verfahren zur Einparkunterstützung.

Aus der DE 10 2005 037468 A1 ist eine gattungsgemäße Vorrichtung und ein Verfahren zur Unterstützung eines Einparkvorgangs eines Fahrzeugs bekannt. Mit einer Sensoranordnung wird eine Parklücke vermessen. Ferner wird mittels einer Auswerteeinheit eine Einparkbahn des Fahrzeugs in die Parklücke bestimmt. Ferner kann ein Benutzer mittels einer Auswahleinrichtung eine Einparkbahn aus mehreren verschiedenen, von der Auswerteeinheit bestimmten Einparkbahnen auswählen.

Aus der WO 2007/014595 A1 ist ein Verfahren zur Ermittlung der Begrenzungen einer Parklücke in der Umgebung eines Fahrzeugs bekannt. Dabei werden Echosignale eines Ultraschallsensors ausgewertet, um insbesondere die Tiefenbegrenzung der Parklücke festzustellen und damit Kollisionen des Fahrzeugs aufgrund des Überragens eines Fahrzeugteils über den Bordstein beim Einparken zu vermeiden.

Aus der EP 1 470 958 A ist ein Verfahren zur Freiraumüberwachung bei Kraftfahrzeugen bekannt. Dabei werden mittels eines Kamerasystems Bilddaten des Fahrzeugumfelds aufgenommen und unter Berücksichtigung der Betriebsparameter und Abmessungen des Fahrzeugs ausgewertet und der für eine ungehinderte Fahrt benötigte Freiraum vorausberechnet. Der Fahrer wird über eine Anzeige informiert, ob genügend Freiraum zur Verfügung steht.

Aus der DE 10 2007 035 219 A1 ist ein Einparkhilfesystem bekannt bei dem von einem Fahrzeug Signale ausgesendet werden und aus von der Fahrwegsbegrenzung reflektierten und empfangenen Signalen ein Objektklassifizierungssignal erzeugt wird, das Informationen über die Beschaffenheit der Fahrwegsbegrenzung enthält.

### Offenbarung der Erfindung

### Vorteile der Erfindung

Die erfindungsgemäße Steuereinrichtung zur Einparkunterstützung für ein Fahrzeug mit den Merkmalen des unabhängigen Anspruchs hat demgegenüber den Vorteil, dass eine Einparkbahn des Fahrzeugs in eine Parklücke unter einer Berücksichtigung einer möglichen Überragbarkeit einer jeweiligen Begrenzung einer Parklücke bestimmt wird. Eine Überragbarkeit einer Begrenzung einer Parklücke liegt dann vor, wenn Teile der Fahrzeugkarosserie, beispielsweise ein Stoßfänger, über eine erfasste Begrenzung der Parklücke hinaus die Begrenzung der Parklücke überragen kann. Dies kann beispielsweise dann der Fall sein, wenn der Stoßfänger über eine Bordsteinkante oder über eine niedrige Mauer hinausragen kann. In diesem Fall kann derjenige Bereich oberhalb der Begrenzung der Parklücke für den Einparkvorgang mit ausgenutzt werden, indem ein entsprechender Bereich des Fahrzeughecks oder der Fahrzeugfront über die Begrenzung der Parklücke hinaus geführt werden kann. Ist die Begrenzung der Parklücke beispielsweise als eine hohe Wand ausgeführt, so liegt keine Überragbarkeit der Begrenzung der Parklücke vor, da die Karosserie des Fahrzeugs einen Abstand zu der Mauer einhalten muss. In diesem Fall kann der Bereich oberhalb der Parklücke nicht zur Führung des Fahrzeughecks bzw. der Fahrzeugfront während des Einparkvorgangs berücksichtigt werden. Vielmehr muss das Fahrzeug auch im Bereich von äußeren Karosserieteilen, wie beispielsweise einem Außenspiegel oder einem Stoßfänger, stets beabstandet, möglicherweise einschließlich eines Sicherheitsabstandes, zu der Begrenzung der Parklücke während des Einparkvorgangs geführt werden.

Liegt eine Überragbarkeit einer Begrenzung der Parklücke vor, so kann bei einer Berücksichtigung dieser Überragbarkeit der Einparkvorgang einfacher gestaltet werden, indem nämlich der Raum oberhalb der Begrenzung der Parklücke mittels einem entsprechenden Überragen durch Karosserieteile des Fahrzeugs mit ausgenutzt werden kann. Ist keine Überragbarkeit gegeben, so kann dieser Raum nicht ausgenutzt werden. Möglicherweise sind dann zusätzliche Einparkzüge erforderlich oder eine Parklücke ist möglicherweise für ein Einparken nicht geeignet. Indem bei einer Begrenzung einer Parklücke eine Überragbarkeit festgestellt oder eingegeben werden kann, kann gegebenenfalls auch eine ansonsten ungeeignete Parklücke für einen Einparkvorgang ausgenutzt werden. Ferner kann sich gegebenenfalls der Einparkweg verkürzen oder vereinfachen. Somit kann ein Einparkvorgang bei einer Berücksichtigung einer Überragbarkeit beschleunigt oder gegebenenfalls sogar überhaupt erst durchgeführt werden.

Entsprechende Vorteile ergeben sich auch für ein Verfahren zur Einparkunterstützung für ein Fahrzeug gemäß dem nebengeordneten Patentanspruch.

Durch die in den unabhängigen Ansprüchen aufgeführten Maßnahmen sind vorteilhafte Weiterbildungen und Verbesserungen der in dem unabhängigen Anspruch angegebenen Steuereinrichtung und des in dem unabhängigen Anspruch angegebenen Verfahrens möglich. So ist es vorteilhaft, dass die Steuereinrichtung eine Schnittstelle zu einer Eingabeeinheit aufweist, mit der ein Benutzer eine Überragbarkeit wenigstens einer Begrenzung der Parklücke eingeben kann. Selbst wenn eine Sensoreinheit zur Erfassung einer Begrenzung einer Parklücke nicht in der Lage ist, festzustellen, ob eine Überragbarkeit eines Hindernisses vorliegt, kann ein Benutzer, wenn er eine Überragbarkeit erkennt, beispielsweise eine Überragbarkeit einer Bordsteinkante, diese Überragbarkeit manuell eingeben.

Weiterhin ist es erfindungsgemäß vorgesehen, eine Schnittstelle für eine Anzeige vorzusehen, um einem Benutzer eine Parklücke anzuzeigen und um ihm auch anzuzeigen, welche Begrenzungen der Parklücke als überragbar erfasst oder eingegeben wurden. Ein Benutzer kann somit erkennen, ob eine entsprechende Kennzeichnung einer Parklückenbegrenzung hinsichtlich ihrer Überragbarkeit zutreffend ist oder nicht. Somit wird sichergestellt, dass ein Benutzer für einen Einparkvorgang eine Rückmeldung darüber erhält, ob die Steuereinrichtung zur Einparkunterstützung eine Parklücke zutreffend als überragbar gekennzeichnet hat und für eine Berechnung eines Fahrweges in eine Parkposition in einer Parklücke berücksichtigt.

Weiterhin ist es vorteilhaft, eine Schnittstelle zu einer Eingabeeinheit zur Auswahl zwischen einem berechneten Fahrweg mit als überragbar angenommenen Begrenzungen und einem berechneten Fahrweg mit als nicht überragbar angenommenen Begrenzungen vorzusehen. Hierdurch ist eine besonders schnelle Auswahl aus sich aus einer unterschiedlichen Überragbarkeit der Begrenzungen ergebenden Fahrwege möglich.

Weiterhin ist es vorteilhaft, eine Schnittstelle zur Ausgabe von Fahranweisungen zur zumindest teilweisen automatischen Steuerung des Fahrzeugs vorzusehen, um beispielsweise eine Lenkung automatisch anzusteuern, um das Fahrzeug automatisch in die gewünschte Parkposition in der Parklücke zu führen.

Ferner ist es vorteilhaft, eine Parkposition in der Parklücke derart zu wählen, dass der Abstand der Parkposition von einer Begrenzung der Parklücke davon abhängt, ob eine jeweilige Begrenzung der Parklücke überragbar ist. Wird das Fahrzeug beispielsweise in eine Parklücke an einer hohen Mauer positioniert, so wird ein größerer Abstand eingehalten. Hiermit kann es einer Person, die an der jeweiligen Seite des Fahrzeugs das Fahrzeug verlassen muss, ermöglicht werden, bequem aus dem Fahrzeug auszusteigen. Ferner kann es auch gegebenenfalls noch ermöglicht werden, einen Kofferraumdeckel bequem zu öffnen. Wäre die entsprechende Begrenzung überragbar, beispielsweise eine Bordsteinkante, so kann die Parkposition sehr nahe an die Begrenzung der Parklücke geführt werden, da im Allgemeinen auch eine Öffnung der Türe oder ein Zugang zu einem Kofferraum über der überragbaren Parklückenbegrenzung problemlos möglich sein wird.

Es ist ferner vorteilhaft, eine mögliche Überragbarkeit durch Karosserieteile des Fahrzeugs davon abhängig zu machen, ob die jeweilige Begrenzung der Parklücke eine vorgegebene Höhe über einer Fahrfläche des Fahrzeugs nicht überschreitet. Die entsprechende Grenzhöhe wird durch die Abmessungen des Fahrzeugs vorgegeben. Ist das Fahrzeug beispielsweise tiefer gelegt, so kann eine entsprechende Grenzhöhe beispielsweise an eine heruntergezogene Front oder Heckschürze des Fahrzeugs angepasst werden. Ist das Fahrzeug beispielsweise als ein Geländewagen ausgeführt, so kann eine entsprechende Überragbarkeit höher gesetzt werden. Nach einer Grenzhöhenfestsetzung ist insbesondere eine nachfolgende automatische Festlegung einer Überragbarkeit auf einfache Weise möglich.

### Kurze Beschreibung der Zeichnungen

Ausführungsbeispiele der Erfindung sind in den Zeichnungen dargestellt und in der nachfolgenden Beschreibung näher erläutert.

Es zeigen
Figur 1 eine schematische Darstellung eines Fahrzeugs mit einer erfindungsgemäßen Steuereinrichtung zur Einparkunterstützung,
Figuren 2 bis 4 unterschiedliche Einparksituationen zur Erläuterung des erfindungsgemäßen Verfahrens zur Einparkunterstützung,
Figuren 5 und 6 Ausführungsbeispiele für Anzeigendarstellungen für die Durchführung des erfindungsgemäßen Verfahrens zur Einparkunterstützung.

### Ausführungsformen der Erfindung

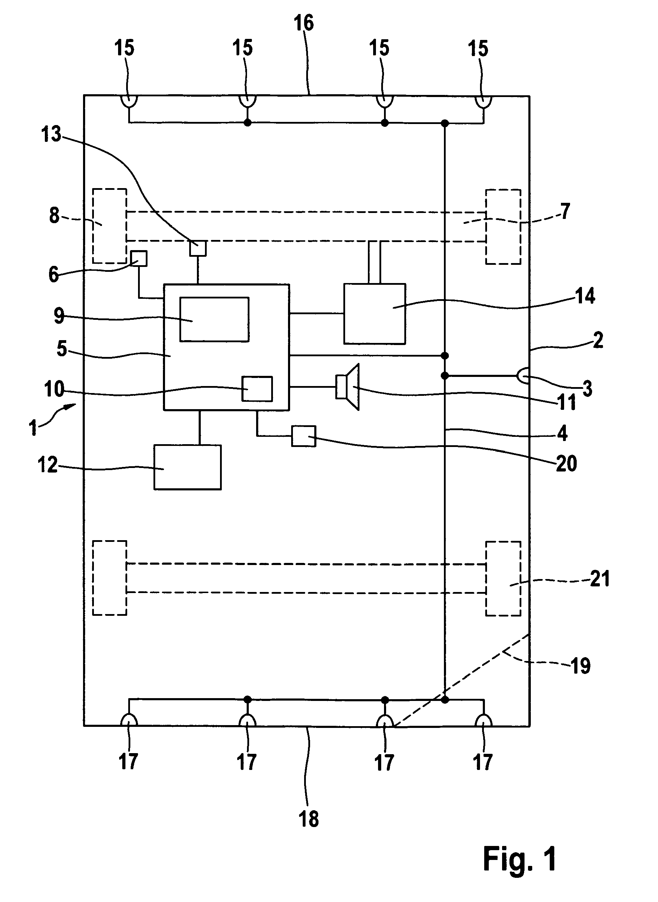

In der Figur 1 ist ein Kraftfahrzeug 1 dargestellt, das an seiner rechten Fahrzeugseite 2 einen Abstandssensor 3 aufweist, der zur Vermessung einer Parklücke bei einer Vorbeifahrt des Fahrzeugs 1 entlang der Parklücke ausgelegt ist. Entsprechende Messergebnisse des Sensors 3 werden über eine Datenschnittstelle 4 an eine Steuereinrichtung 5 geleitet. Der Abstandssensor 3 ist beispielsweise als ein Ultraschall-Abstandssensor ausgeführt. Die Steuereinrichtung 5 ist ferner mit einem Wegesensor 6 verbunden, der beispielsweise benachbart zu einer Vorderachse 7 des Fahrzeugs 1 angeordnet ist. Der Wegesensor 6 misst eine mit dem Rad 8 zurückgelegte Wegstrecke des Fahrzeugs, während der Abstandssensor 3 Abstände zu seitlichen Hindernissen an der rechten Fahrzeugseite 2 vermisst. Hierdurch kann eine Umgebungskarte an der rechten Fahrzeugseite 2 des Fahrzeugs 1 ermittelt werden. Insbesondere ist es möglich zu prüfen, ob sich an der rechten Fahrzeugseite 2 eine Parklücke befindet, die für ein Einparken mit dem Fahrzeug 1 ausreichend ist Um eine entsprechende Parklücke aufzufinden, vergleicht eine Recheneinheit 9 der Steuereinrichtung 5 die gemessene Parklückenbreite und/oder Länge mit in einem Speicher 10 der Steuereinrichtung 5 abgelegten Fahrzeugdaten. Ausgehend von einer aktuellen Position des Fahrzeugs berechnet die Steuereinrichtung 5 mittels der Recheneinheit 9 einen Fahrweg des Fahrzeugs in eine Parkposition in der Parklücke. In einer ersten Ausführungsform werden hierzu über einen Lautsprecher 11 und/oder über eine Anzeige 12 Fahranweisungen an einen Fahrer des Fahrzeugs 1 ausgegeben. In einer weiteren Ausführungsform kann auch eine Lenkeinrichtung 13 des Fahrzeugs derart angesteuert werden, dass das Fahrzeug automatisch in die Parklücke geführt wird. In einer weiteren Ausführungsform kann zudem die Steuereinrichtung 5 mit einer Antriebseinheit 14 des Fahrzeugs verbunden sein, um das Fahrzeug auch automatisch in die Parklücke zu führen. Während des Einparkvorgangs wird der Fahrweg vor bzw. hinter dem Fahrzeug über Abstandssensoren 15 an einer Frontseite 16 des Fahrzeugs und/oder über Abstandssensoren 17 an einer Rückseite 18 des Fahrzeugs überwacht

In einer ersten Ausführungsform ist der Abstandssensor 3 dazu ausgelegt, lediglich Begrenzungen einer Parklücke zu erfassen. Entsprechend wird auch eine Bordsteinkante, die einen Straßenverlauf begrenzt als eine Begrenzung einer Parklücke aufgefasst. Insbesondere für den Fall, dass ein rückwärtiges Einparken in eine Parklücke erfolgen soll, die parallel zu einer Fahrtrichtung des Fahrzeugs führt, kann es jedoch vorteilhaft sein, wenn ein rechter Heckbereich die als Bordsteinkante ausgeführte Parklückenbegrenzung überragt. Ein entsprechender Heckbereich ist in der Figur 1 durch eine gestrichelte Linie 19 gekennzeichnet. In einer Ausführungsform kann nun ein Benutzer über eine Eingabeeinheit 20 eingeben, dass die rechte Längsbegrenzung der Parklücke eine überragbare Begrenzung ist. Entsprechend wird dies nun von der Recheneinheit 9 bei der Bahnplanung berücksichtigt und es wird einkalkuliert, dass nun der durch die gestrichelte Linie 19 abgegrenzte Bereich des Fahrzeugs 1 über die erfasste Begrenzung der Parklücke hinausragen darf. Das rechte Hinterrad 21 darf jedoch die Begrenzung der Parklücke nicht erreichen, beispielsweise um einen Schaden durch eine Bordsteinberührung an dem Reifen 21 zu verhindern. Liegt keine Überragbarkeit der Parklückenbegrenzungen vor, so wird der Fahrweg des Fahrzeugs 1 in die Parklücke derart berechnet, dass von allen Seiten des Fahrzeugs zu den erfassten Begrenzungen der Parklücke ein vorgegebener Mindestabstand, der im Wesentlichen durch die Messunsicherheiten des Abstandssensors 3 bzw. der Abstandssensoren 15, 17 vorbestimmt ist und der beispielsweise 5-20 cm beträgt, eingehalten wird.

Anstelle einer Bordsteinkante können auch beliebige andere überragbare Parklückenbegrenzungen als überragbar eingegeben werden. Beispielsweise können dies Markierungen sein, die lediglich auf einen Straßenbelag aufgetragen wurden. Insbesondere bei einer Erfassung einer Parklückenbegrenzung über einen als Videosensor ausgeführten Abstandssensor 3 kann möglicherweise eine derartige Begrenzung, die problemlos überfahren werden kann, bei einer Bahnplanung des Einparkwegs in die Parkposition als einschränkend aufgefasst werden.

In einer weiteren Ausführungsform kann der Abstandssensor 3 auch dazu ausgelegt sein, beispielsweise durch ein geeignetes Messverfahren, die jeweiligen Höhen von Parklückenbegrenzungen auszumessen. Durch einen Vergleich der gemessenen Höhe mit einer in dem Speicher 10 der Steuereinrichtung 5 abgelegten Höhe kann dann bestimmt werden, ob die jeweilige Parklückenbegrenzung als überragbar eingestuft werden kann oder nicht. Hierzu ist in dem Speicher 10 eine entsprechende fahrzeugspezifische Höhe abgelegt.

Gegebenenfalls kann über den Lautsprecher 11 und/oder über die Anzeige 12 auch eine Warnung ausgegeben werden, wenn ein Benutzer eine Parklückenbegrenzung als überragbar klassifiziert, während die Abstandssensoren 3, 15, 17 des Fahrzeugs 1 jedoch eine entsprechende Überragbarkeit nicht erkennen können.

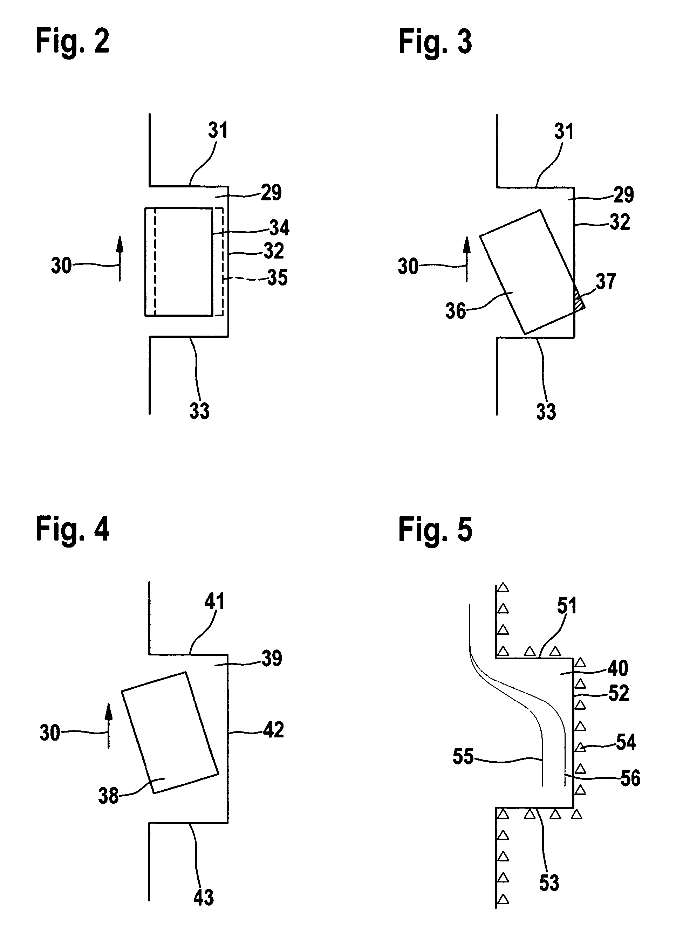

In der Figur 2 ist ein erstes Ausführungsbeispiel für mögliche Parkpositionen in einer Parklücke 29 dargestellt. Die Parklücke 29, die parallel zu einer Fahrtrichtung 30 ausgerichtet ist, ist durch eine vordere Begrenzung 31, durch eine seitliche Begrenzung 32 und durch eine hintere Begrenzung 33 jeweils begrenzt. Werden alle drei Begrenzungen als nicht überragbar eingestuft, so wird das Fahrzeug in eine Parkposition 34 geführt, in der es einen Mindestabstand während des Einparkvorgangs zu den Parklückenbegrenzungen 31, 32, 33 aufweist. Ferner ist die Parkposition 34 so gewählt, dass auch nach Abstellen des Fahrzeugs jeweils ein Mindestabstand zu den Parklückenbegrenzungen 31, 32, 33 eingehalten wird. Ferner ist eine weitere Parkposition 35 gestrichelt dargestellt. In der Parkposition 35 ist der Abstand gegenüber der rechten Parklückenbegrenzung 32 verringert. In diesem Fall ist lediglich die seitliche Parklückenbegrenzung 32 als überragbar eingegeben oder erfasst worden. Der Abstand der Parkposition 35 zu der rechten Parklückenbegrenzung 32 wird gegenüber der Parkposition 34 verringert.

In der Figur 3 ist ein Beispiel für eine Durchführung eines Einparkvorgangs eines Fahrzeugs 36 in die Parklücke 29 dargestellt. Entsprechend der Situation zugehörig zu der Parkposition 35 in der Figur 2 ist die seitliche Parklückenbegrenzung 32 als eine überragbare Parklückenbegrenzung ausgeführt. In diesem Fall könnte das Fahrzeug 36 derart in die Parklücke 29 eingeführt werden, dass eine hintere rechte Ecke 37, schraffiert dargestellt, die rechte Parklückenbegrenzung 32 während des Einparkvorgangs überragen kann.

In der Figur 4 ist eine alternative Situation dargestellt, bei der ein Fahrzeug 38 in eine größere Parklücke 39 eingefahren wird. Ebenfalls ist eine vordere Parklückenbegrenzung 41, eine seitliche Parklückenbegrenzung 42 und eine hintere Parklückenbegrenzung 43 vorgesehen, die alle jeweils nicht überfahrbar sind. So können die vordere und die hintere Parklückenbegrenzung 41, 43 beispielsweise durch Fahrzeuge gebildet sein. Die seitliche Parklückenbegrenzung 42 ist beispielsweise durch eine Hauswand gebildet. Das Fahrzeug 38 kann nun den Bereich jenseits der Parklückenbegrenzung 41, 42, 43 für einen Einparkvorgang nicht ausnutzen. Daher muss das Fahrzeug 38 ohne eine Berührung der Parklückenbegrenzungen 41, 42, 43 in die Parklücke 39 geführt werden. Die Parklücke 39 muss daher größer sein als die Parklücke 29, bei der die jeweiligen seitlichen Parklückenbegrenzungen überragt werden können.

Ein erstes Ausführungsbeispiel für eine Anzeigendarstellung ist in der Figur 5 dargestellt. In der Anzeige ist eine Parklücke 40 gezeigt, die von Parklückenbegrenzungen an der Vorderseite 51, an der Längsseite 52 und an der Rückseite 53 begrenzt wird. Die jeweiligen Parklückenbegrenzungen 51, 52, 53 sind jeweils nicht überragbar. Hierdurch wird auf entlang der Parklückenbegrenzungen dargestellte Symbole 54 hingewiesen. In einer weiteren Ausführungsform können in der Anzeigendarstellung ein erster Einparkweg 55 und ein zweiter Einparkweg 56 dargestellt sein. Der erste Einparkweg 55 entspricht dabei der Situation, dass keine der Parklückenbegrenzungen überragbar ist. Der zweite Einparkweg 56 entspricht derjenigen Situation, in dem die seitliche Parklückenbegrenzung 52 überragbar ist. Ein Benutzer kann nun prüfen, ob die seitliche Parklückenbegrenzung 52 tatsächlich nicht überragbar ist Falls diese überragbar ist, kann das Fahrzeug den zweiten Einparkweg 56 wählen, wobei dann auch die Symbole 54 an der seitlichen Parklückenbegrenzung 52 in der Anzeige entsprechend geändert werden.

Gemäß dem Ausführungsbeispiel der Figur 5 werden die beiden Einparkbahnen 55, 56 zeitgleich angezeigt. Es ist jedoch auch möglich erst eine Einparkbahn und nach Auswahl durch den Fahrer eine andere Einparkbahn in einer Anzeige darzustellen.

Sind beide Einparkbahnen 55, 56 möglich, so ist die Frage, ob eine seitliche Parklückenbegrenzung überragbar ist, für einen Erfolg des Einparkvorgangs nicht entscheidend. Reicht die Länge der Parklücke jedoch nicht aus, so kann gegebenenfalls nur bei einer überragbaren seitlichen Parklückenbegrenzung ein Einparkvorgang erfolgreich abgeschlossen werden.

In einer Ausführungsform wird zunächst jede Begrenzung als nicht überragbar angenommen, dass heißt dem Fahrer wird beispielsweise in der Anzeige die Situation gemäß der Figur 5 dargestellt. Eine überragbare Parklückenbegrenzung wird gemäß dieser Ausführungsform erst dann angenommen, wenn der Fahrer entsprechend eine Überragbarkeit der jeweiligen Parklückenbegrenzung bestätigt hat

Eine Überragbarkeit beispielsweise der vorderen oder der hinteren Parklückenbegrenzung 52, 53 kann ebenfalls sinnvoll berücksichtigt werden. So kann die Fahrzeugfront oder das Fahrzeugheck für den Fall, dass die vordere oder die hintere Parklückenbegrenzung überragbar ist, entsprechend weiter vor bzw. zurück bewegt werden, um insbesondere bei einem mehrzügigen Einparken das Fahrzeug entsprechend in eine geeignete Parkposition in der Parklücke zu führen.

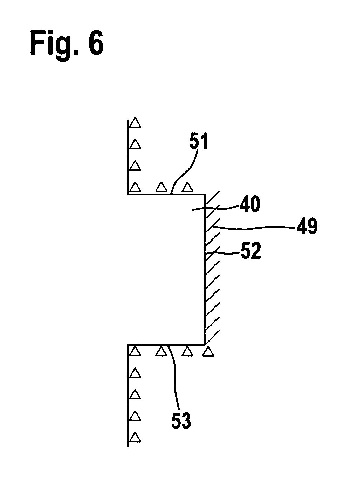

In der Figur 6 ist eine alternative Anzeigendarstellung gezeigt, bei der ebenfalls die Parklücke 40 dargestellt ist. Ebenfalls sind auch die nicht überragbaren Parklückenbegrenzungen 51 und 53 gezeigt. Die seitliche Parklückenbegrenzung 52 ist nunmehr durch ein entsprechendes Symbol 49 als eine überfahrbare Parklückenbegrenzung gekennzeichnet. Ein Betrachter kann nunmehr erkennen, dass bei einem durch die Steuereinrichtung gesteuerten Einparkvorgang eine Überragbarkeit der rechten Parklückenbegrenzung 52 angenommen wird.

## Patentansprüche

1. Steuereinrichtung (5) zur Einparkunterstützung für ein Fahrzeug, mit einer Schnittstelle (4) zu einer Sensoreinheit (3) zur Erfassung einer Begrenzung einer Parklücke (29) in einer Umgebung des Fahrzeugs (1), mit einer Recheneinheit (9) zur Bestimmung eines Fahrwegs zu einer Parkposition (34, 35) in der Parklücke (29), **dadurch gekennzeichnet, dass** die Recheneinheit (9) ausgelegt ist, einen Fahrweg (55, 56) zu der Parkposition (34, 35) unter Berücksichtigung einer Überragbarkeit der Begrenzung (31, 32, 33) der Parklücke (29) durch Karosserieteile (19) des Fahrzeugs (1) zu berechnen, wobei eine Anzeige (12) und eine Schnittstelle zu der Anzeige (12) zur Darstellung von Begrenzungen (51, 52, 53) der Parklücke vorgesehen sind wobei die Begrenzungen (51, 52, 53) der Parklücke jeweils dahingehend gekennzeichnet sind, ob sie durch das Fahrzeug überragbar sind.

2. Steuereinrichtung nach Anspruch 1, **gekennzeichnet durch** eine Schnittstelle zu einer Eingabeeinheit (20) zur Eingabe einer Überragbarkeit der Begrenzung (31, 32, 33) der Parklücke (29) **durch** Teile des Fahrzeugs.

3. Steuereinrichtung nach einem der vorhergehenden Ansprüche, **gekennzeichnet durch** eine Schnittstelle zu einer Eingabeeinheit (20) zur Auswahl zwischen einem berechneten Fahrweg (56) in eine Parklücke mit einer als überragbar angenommenen Begrenzung und einem berechneten Fahrweg (55) in die Parklücke mit einer als nicht überragbar angenommenen Begrenzung.

4. Steuereinrichtung nach einem der vorhergehenden Ansprüche, **gekennzeichnet durch** eine Schnittstelle zur Ausgabe von Fahranweisungen zur zumindest teilweise automatischen Steuerung des Fahrzeugs in die Parklücke.

5. Verfahren zur Einparkunterstützung für ein Fahrzeug, wobei eine Begrenzung (31, 32, 33) einer Parklücke (29) in der Umgebung des Fahrzeugs (1) erfasst wird, wobei ein Fahrweg (55, 56) zu einer Parkposition (34, 35) in der Parklücke bestimmt wird, **dadurch gekennzeichnet, dass** zwischen einer Überragbarkeit und einer fehlenden Überragbarkeit der Begrenzung der Parklücke durch Teile des Fahrzeugs gewählt wird und dass ein Fahrweg in die Parklücke unter Berücksichtigung einer möglichen Überragbarkeit der Begrenzung der Parklücke berechnet wird, wobei in einer Anzeige die Begrenzungen der Parklücke dargestellt werden, wobei die Begrenzungen der Parklücke jeweils dahingehend gekennzeichnet werden, ob sie durch das Fahrzeug überragbar sind.

6. Verfahren nach Anspruch 5, **dadurch gekennzeichnet, dass** eine Parkposition in der Parklücke derart gewählt wird, dass der Abstand der Parkposition von einer Begrenzung der Parklücke davon abhängt, ob eine Überragbarkeit der Begrenzung der Parklücke vorliegt.

7. Verfahren nach einem der Ansprüche 5-6, **dadurch gekennzeichnet, dass** eine mögliche Überragbarkeit der Begrenzung der Parklücke durch Teile des Fahrzeugs durch einen Benutzer eingegeben wird oder aus Messgrößen bestimmt wird.

8. Verfahren nach einem der Ansprüche 5-7, **dadurch gekennzeichnet, dass** eine mögliche Überragbarkeit einer Begrenzung der Parklücke durch Karosserieteile des Fahrzeugs dann vorliegt, wenn die Begrenzung der Parklücke eine vorgegebene Höhe über einer Fahrfläche des Fahrzeugs nicht überschreitet.

## Claims

1. Control device (5) for assisting a parking process for a vehicle, having an interface (4) with a sensor unit (3) for sensing the boundary of a parking space (29) in the surroundings of the vehicle (1), having a computing unit (9) for determining a path to a parking position (34, 35) in the parking space (29), **characterized in that** the computing unit (9) is configured to calculate a path (55, 56) to the parked position (34, 35) taking into account the possibility of bodywork parts (19) of the vehicle (1) projecting beyond the boundary (31, 32, 33) of the parking space (29), wherein a display (12) and an interface with the display (12) for displaying boundaries (51, 52, 53) of the parking space are provided, wherein the boundaries (51, 52, 53) of the parking space are each characterized as to whether the vehicle can project beyond them.

2. Control device according to Claim 1, **characterized by** an interface with an input unit (20) for inputting a possibility of parts of the vehicle projecting beyond the boundary (31, 32, 33) of the parking space (29).

3. Control device according to one of the preceding claims, **characterized by** an interface with an input unit (20) for selecting between a calculated path (56) into a parking space with a boundary beyond which it is assumed it is possible to project and a calculated path (55) into the parking space with a boundary beyond which it is assumed it is not possible to project.

4. Control device according to one of the preceding claims, **characterized by** an interface for inputting driving instructions for at least partially automatically steering the vehicle into the parking space.

5. Method for assisting a parking process of a vehicle, wherein a boundary (31, 32, 33) of a parking space (29) in the surroundings of the vehicle (1) is sensed, wherein a path (55, 56) to a parked position (34, 35) in the parking space is determined, **characterized in that** a selection is made between the possibility of parts of the vehicle projecting beyond, and a lack of a possibility of parts of the vehicle projecting beyond, the boundary of the parking space, and **in that** a path into the parking space is calculated taking into account a possibility of projection beyond the boundary of the parking space, wherein in a display the boundaries of the parking space are displayed, wherein the boundaries of the parking space are each characterized as to whether the vehicle can project beyond them.

6. Method according to Claim 5, **characterized in that** a parked position in the parking space is selected in such a way that the distance between the parked position and a boundary of the parking space depends on whether there is a possibility of projection beyond the parking space.

7. Method according to one of Claims 5-6, **characterized in that** the possibility of parts of the vehicle projecting beyond the boundary of the parking space is input by a user or is determined from measurement variables.

8. Method according to one of Claims 5-7, **characterized in that** a possibility of bodywork parts of the vehicle projecting beyond the boundary of the parking space is present if the boundary of the parking space does not exceed a predefined height above the driving surface of the vehicle.

## Revendications

1. Dispositif de commande (5) permettant l'assistance au stationnement d'un véhicule et présentant
une interface (4) avec une unité de capteur (3) qui détecte les limites d'un emplacement de stationnement (29) dans l'environnement du véhicule (1),
une unité de calcul (9) qui détermine un parcours vers une position de stationnement (34, 35) dans l'emplacement de stationnement (29),
**caractérisé en ce que**
l'unité de calcul (9) est conçue pour calculer un parcours (55, 56) vers la position de stationnement (34, 35) en tenant compte de la possibilité que des pièces de carrosserie (19) du véhicule (1) débordent au-delà de la limite (31, 32, 33) de l'emplacement de stationnement (29),
**en ce qu'**un affichage (12) et une interface avec l'affichage (12) sont prévus pour présenter les limites (51, 52, 53) de l'emplacement de stationnement,
les limites (51, 52, 53) de l'emplacement de stationnement étant caractérisées selon qu'elles peuvent ou non être débordées par le véhicule.

2. Dispositif de commande selon la revendication 1, **caractérisé par** une interface avec une unité d'introduction (20) qui introduit une possibilité de débordement de la limite (31, 32, 33) de l'emplacement de stationnement (29) par des parties du véhicule.

3. Dispositif de commande selon l'une des revendications précédentes, **caractérisé par** une interface avec une unité d'introduction (20) qui permet de sélectionner entre un parcours calculé (56) vers l'emplacement de stationnement avec une limite supposée pouvoir être débordée et un parcours calculé (55) jusque dans l'emplacement de stationnement avec une limite supposée ne pas pouvoir être débordée.

4. Dispositif de commande selon l'une des revendications précédentes, **caractérisé par** une interface qui permet de délivrer des indications de conduite en vue d'une commande au moins partiellement automatique du véhicule jusque dans l'emplacement de stationnement.

5. Procédé d'assistance au stationnement d'un véhicule, dans lequel la limite (31, 32, 33) d'un emplacement de stationnement (29) présent dans l'environnement du véhicule (1) est détectée et le parcours (55, 56) vers une position de stationnement (34, 35) dans l'emplacement de stationnement est déterminé,
**caractérisé en ce que**
une sélection est faite entre la possibilité de débordement et l'absence de possibilité de débordement de la limite de l'emplacement de stationnement par des parties du véhicule,
**en ce qu'**un parcours jusque dans l'emplacement de stationnement est calculé en tenant compte de la possibilité que la limite de l'emplacement de stationnement soit débordée,
**en ce que** les limites de l'emplacement de stationnement sont représentées sur un affichage et
**en ce que** les limites de l'emplacement de stationnement sont caractérisées selon qu'elles peuvent être débordées ou non par le véhicule.

6. Procédé selon la revendication 5, **caractérisé en ce qu'**une position de stationnement dans l'emplacement de stationnement est sélectionnée par le fait que la distance entre la position de stationnement et une limite de l'emplacement de stationnement dépend de la possibilité de débordement de la limite de l'emplacement de stationnement.

7. Procédé selon l'une des revendications 5 à 6, **caractérisé en ce que** la possibilité de déborder de la limite de l'emplacement de stationnement par des parties du véhicule est introduite par un utilisateur ou est déterminée à partir de grandeurs de mesure.

8. Procédé selon l'une des revendications 5 à 7, **caractérisé en ce que** la limite de l'emplacement de stationnement peut être débordée par des parties de la carrosserie du véhicule si la limite de l'emplacement de stationnement ne dépasse pas une hauteur prédéterminée au-dessus de la surface sur laquelle le véhicule se déplace.
